(19) Europäisches Patentamt
European Patent Office
Office européen des brevets

(11) Veröffentlichungsnummer: **0 260 542 A2**

# (12) EUROPÄISCHE PATENTANMELDUNG

(21) Anmeldenummer: **87112925.0**

(22) Anmeldetag: **04.09.87**

(51) Int. Cl.⁴: **G11B 5/70**, G11B 5/71

(30) Priorität: **17.09.86 DE 3631537**

(43) Veröffentlichungstag der Anmeldung:
**23.03.88 Patentblatt 88/12**

(84) Benannte Vertragsstaaten:
**BE DE FR GB IT NL**

(71) Anmelder: **BAYER AG**
**Konzernverwaltung RP Patentabteilung**
**D-5090 Leverkusen 1 Bayerwerk(DE)**

(72) Erfinder: **Schick, Peter, Dr.**
**Buschstrasse 171**
**D-4150 Krefeld(DE)**
Erfinder: **Jonas, Friedrich, Dr.**
**Krugenofen 15**
**D-5100 Aachen(DE)**
Erfinder: **Leitner, Lutz, Dr.**
**Buschstrasse 151**
**D-4150 Krefeld(DE)**

## (54) Magnetlackdispersionen, Verfahren zu ihrer Herstellung und deren Verwendung.

(57) Die vorliegende Erfindung betrifft Magnetlackdispersionen für magnetische Aufzeichnungsträger, bestehend aus Magnetpigment, Abrasiv, Ruß oder einem anderen Additiv zur Regulierung der Leitfähigkeit, Bindemittel, Lösemittel, Lubricant, Netzmittel und gegebenenfalls Vernetzer für das Bindemittel, wobei die jeweils eingesetzte Menge von Netzmittel und/oder Lubricant jeweils im Bereich zwischen mindestens 100 und 140 % der einzeln bestimmten Sättigungsadsorptionen des Netzmittels und des Lubricants liegt, die Mindestmenge an Netzmittel und/oder Lubricant aber 80 % der einzeln bestimmten Sättigungsadsorptionen beträgt.

EP 0 260 542 A2

## Magnetlackdispersionen, Verfahren zu ihrer Herstellung und deren Verwendung

Die vorliegende Erfindung betrifft Magnetlackdispersionen, Verfahren zu ihrer Herstellung, sowie deren Verwendung für die Herstellung von magnetischen Aufzeichnungsträgern.

Magnetlackdispersionen bestehen im allgemeinen aus einem oder mehreren Magnetpigmenten, Abrasiv (z.B. Chromoxid, $Cr_2O_3$), Ruß zur Regulierung der Oberflächenleitfähigkeit der unter Verwendung dieser Magnetlackdispersionen hergestellten magnetischen Aufzeichnungsmaterialien. Diese Feststoffe sind üblicherweise dispergiert in einem Polymerbindemittel ind organischen Lösemitteln unter Verwendung von Phospholipiden als Netzmittel und langkettigen, gesättigten Carbonsäuren als Lubricant.

Zur Herstellung von Magnetlackdispersionen im Batch-Verfahren werden üblicherweise die obengenannten Rezeptur bestandteile zunächst z.B. unter einem Labordissolver oder einer Zahnkolloidmühle vordispergiert und in einem zweiten Arbeitsgang in einer diskontinuierlichen oder kontinuierlichen Perlmühle dispergiert.

Daneben sind zweistufige Verfahrensweisen gängig, die sich von dem beschriebenen Batch-Verfahren dadurch unterscheiden, daß Teile der flüssigen Rezepturbestandteile und auch des Bindemittels in einem dritten Verfahrensschritt, der sogenannten Auflackung zugegeben werden. Die verbleibende Mahlgutformulierung wird auch hier, wie beim Batch-Verfahren beschrieben, vordispergiert und in einer Perlmühle geeigneter Bauart gemahlen.

Die so erhaltene Magnetlackdispersion dient zum Beschichten von Trägerfolien, aus denen magnetische Aufzeichnungsträger für verschiedene Anwendungen gefertigt werden. Die Qualität der hergestellten Magnetlackdispersionen hängt entscheidend von der Natur, der Menge und der Art der Einarbeitung der Netzmittel und Lubricants in die Dispersion ab.

Die Verwendung von Lecithinen als Netzmittel und Carbonsäuren als Lubricant als Hilfsstoffe zur Herstellung von Magnetlackdispersionen ist in der Litatur bekannt, z.B. JP 085 132, JP 089 834, JP 116 309. Die derart erhaltenen Magnetlackdispersionen sind jedoch nicht zur Herstellung von magnetischen Aufzeichnungsträgern mit optimalen Eigenschaften geeignet.

Aufgabe der vorliegenden Erfindung ist es daher, Magnetlackdispersionen zur Verfügung zu stellen, die diese Nachteile nicht aufweisen.

Überraschenderweise wurden nun solche Magnetlackdispersionen gefunden. Diese sind Gegenstand dieser Erfindung. Es sind Magnetlackdispersionen für magnetische Aufzeichnungsträger, bestehend aus Magnetpigment, Abrasiv, Ruß oder einem anderen Additiv zur Regulierung der Leitfähigkeit, Bindemittel, Lösemittel, Lubricant, Netzmittel und gegebenenfalls Vernetzer für das Bindemittel, wobei die jeweils eingesetzte Menge von Netzmittel und/oder Lubricant jeweils im Bereich zwischen mindestens 100 und 140 % der einzeln bestimmten Sättigungsadsorptionen des Netzmittels und des Lubricantsliegt, die Mindestmenge an Netzmittel und/oder Lubricant aber 80 % der einzeln bestimmten Sättigungsadsorptionen beträgt. Höhere Anteile als 140 % erwiesen sich als nachteilig.

Bei den erfindungsgemäßen Magnetlackdispersionen wirken das Lubricant und das Netzmittel synergistisch.

Die Adsorptionsisotherme von beispielsweise Laurinsäure als Lubricant an das verwendete Magnetpigment in n-Heptan wird folgendermaßen bestimmt:

Durchführung 8,0 g Laurinsäure in 500 g n-Heptan lösen. 100 g Pigment zugeben und 20 min mit Ultraturrax dispergieren. Anschließend 2 h in einem Ultrashallbad behandeln und 5 h bei Raumtemperatur rühren. Die Lösung wird mit n-Heptan auf die ursprüngliche Menge aufgefüllt. Nach 24 h werden von der überstehenden klaren Lösung ca. 50 ml abpipettiert und ausgewogen (X . g). Nach Zugabe von 2 Tropfen Phenolphthaleinlösung wird mit ethanolischer KOH biz zum Farbumschlag von farblos nach rosa titriert (V ml).

Berechnung der adsorbierten Laurinsäure:

$$8 - \frac{V \cdot 0{,}02 \cdot 508}{X} = \text{g ads. Laurinsäure/100 g Pigment}$$

Die Adsorption von Lecithin an das Magnetpigment wird wie folgt bestimmt:

8,0 g Lecithin in 500 g n-Heptan lösen. 100 g Pigment zugeben und 20 min mit Ultraturrax dispergieren. Anschließend 2 h in einem Ultraschallbad behandeln und 5 h bei Raumtemperatur rühren. Die Lösung wird mit n-Heptan auf die ursprüngliche Menge aufgefüllt. Nach 24 h werden von der überstehenden klaren Lösung ca. 100 ml in einem ausgewogenen 250 ml Rundkolben pipettiert und das Gewicht der Lösung bestimmt (X g). Das Lösemittel wird am Rotationsverdampfer im Wasserstrahlvakuum entfernt und der Kolben anschließend 2 h bei 70°C nachgetrocknet. Nach dem Abkühlen auf Zimmertemperatur wird die Lecithinmenge ausgewogen (L g).

Berechnung des adsorbierten Lecithins:

$$8 - \frac{L \cdot 508}{X} = \text{g ads. Lecithin/100 g Pigment}$$

Zur Herstellung von magnetischen Aufzeichnungsträgern werden mindestens die vorstehend bestimmten Mengen Netzmittel und Lubricant benötigt, vorzugsweise ein Überschuß, bezogen auf diese berechneten Mengen bis zu 40 %; magnetische Aufzeichnungsträger mit opitmalen Eigenschaften werden mit Überschüssen von 20 bis 30 %, bezogen auf die mit den Adsorptionsthermen bestimmten Mengen, erreicht.

Bevorzugt sind die erfindungsgemäßen Magnetlackdispersionen, in denen das Lubricant eine oder mehrere langkettige Carbonsäuren und das Netzmittel ein oder mehrere Phospholipide sind.

Besonders bevorzugt ist das Netzmittel Reinlecithin mit einem Phospholipidanteil von mindestens 80 %. Als Lubricant sind gesättigte Carbonsäuren, insbesondere lineare Monocarbonsäuren, mit einer C-Zahl zwischen 6 und 30 besonders geeignet.

Gegenstand der vorliegenden Erfindung sind auch Verfahren zur Herstellung der erfindungsgemäßen Magnetlackdispersionen. Diese können hergestellt werden aus dem jeweiligen Magnetpigment, Abrasiv, Ruß oder einem anderen Additiv zur Regulierung der Leitfähigkeit, Bindemittel, Lösemittel, Lubricant, Netzmittel und gegebenenfalls Vernetzer für das Bindemittel, wobei das Netzmittel und/oder das Lubricant jeweils im Bereich zwischen mindestens 100 und 140 % der einzeln bestimmten Sättigungsadsorption des Netzmittels und des Lubricants eingesetzt werden, die Mindestmenge an Netzmittel und/oder Lubricant aber 80 % der einzeln bestimmten Sättigungsadsorptionen beträgt.

Zur Herstellung der erfindungsgemäßen Magnetlackdispersionen können Magnetpigmente verwendet werden, wie beispielsweise γ-Eisenoxide, Cobaltmasse-dotierte Eisenoxide, cobaltepitaxial-beschichtete Eisenoxide, Magnetite, Chromdioxid, Bariumferrit und Metallpigmente.

Als Bindemittel zur Herstellung der feinteiligen Magnetlackdispersionen werden Polyurethanelastomere oder die entsprechenden Polyurethanbildner, Polyvinylalkohole, Polyvinylchloride, Nitrocellulosen, Epoxidharze, Polyisocyanate, höhermolekulare Polyhydroxyverbindungen, Copolyamide, Polyvinylformale, Phenoxyharze, Polyesterharze und Gemische dieser Polymeren oder Präpolymeren verwendet.

Als Lösemittel für die vorstehend genannten Bindemittel oder Bindemittelgemische können abhängig von der Löslichkeit dieser Bindemittel oder Bindemittelgemische folgende Verbindungsklassen verwendet werden: Cyclohexanon, Ketone, Tetrahydrofuran, Xylole, Toluole, Ester oder andere geeignete Lösemittel oder Kombinationen dieser Lösemittel.

Als Lubricant werden bevorzugt eine oder mehrere langkettige Carbonsäuren und als Netzmittel ein oder mehrere Phospholipide eingesetzt.

Bevorzugt ist dabei als Netzmittel Reinlecithin mit einem Phospholipidanteil von mindestens 80 %.

Als Lecithine können auch andere Phospholipide, wie beispielsweise Kephaline oder synthetische Produkte verwendet werden, deren eingesetzte Menge ebenfalls nach dem erfindungsgemäßen Verfahren optimiert wird.

Eine bevorzugte Ausführungsform des erfindungsgemäßen Verfahrens besteht darin, daß als Lubricant eine oder mehrere gesättigte Carbonsäuren, insbesondere lineare Monocarbonsäure, mit einer C-Atomzahl zwischen 6 und 30 eingesetzt werden. Beispielhhaft seien hier Laurinsäure oder Stearinsäure genannt.

Es hat sich gezeigt, daß optimale Magnetlackdispersionen dann erhalten werden, wenn die volle bestimmte Menge an Netzmittel und Lubricant in der für den Mahlansatz vorgesehenen Menge an Bindemittellösung gelöst wird, so daß diese für den Mahlvorgang vollständig zur Verfügung steht.

Gegenstand der vorliegenden Erfindung ist auch die Verwendung der erfindungsgemäßen Magnetlackdispersionen für die Herstellung von magnetischen Aufzeichnungsträgern.

Die Erfindung wird im folgenden beispielhaft erläutert, ohne daß hierin eine Einschränkung zu sehen ist.

Beispiele

Tabelle 1: Angegeben sind die, wie oben beschrieben, einzeln bestimmten adsorbierten Mengen an Laurinsäure und Lecithin (1 = Stearinsäure)

| Pigment Nr. | Laurinsäure g | Lecithin g |
|---|---|---|
| 1 | 3,2 | 3,2 |
| 2 | 4,4 | 5,4 |
| 3 | 3,2 | 4,2 |
| 1 | 4,5[1)] | 3,2 |

Tabelle 2: Beschreibung der in den Beispielen verwendeten cobaltepitaxialbeschichteten magnetischen Eisenoxide (Pigmente)

| | Pigment 1 | Pigment 2 | Pigment 3 |
|---|---|---|---|
| Teilchenlänge (µm) | 0,3 | 0,25 | 0,3 |
| Länge/Breite-Verhältnis | 10:1 | 8:1 | 10:1 |
| BET-Oberfläche ($m^2$/g) | 27 | 39 | 29 |
| Ölabsorption (g/100 g) DIN | 42 | 47 | 41 |
| Koerzitivkraft (KA/m) | 50,8 | 50,2 | 49,4 |

Die in Tabelle 3 in den Beispielen 1 bis 16 gennanten Formulierungen werdem wie folgt hergestellt:

Die Bindemittellösung wird durch Rühren der angegebenen Bindemittel in den Lösemitteln hergestellt; die erhaltene Lösung wird filtriert und danach mit Laurinsäure und Reinlecithin versetzt. Es wird so lange gerührt, bis eine klare Lösung erhalten wird. Nun werden die Pigmente hinzugefügt. Dieses Gemisch wird unter einem Dissolver ca. 30 min vordispergiert. Danach wird in einer Perlmühle mit 1-mm-Glasperlen 3 h dispergiert. Das Isocyanat wird 15 min vor Beendigung des Dispergiervorganges in die Perlmühle zugegeben.

Der Lack wird unmittelbar nach Beendigung der Dispergierung filtriert und sofort zu einem Band weiterverarbeitet. Das Band wird kalandriert und zum Abschluß der Vernetzungsreaktion getempert.

Tabelle 4 gibt videoelektrische Eigenschaften und Standbildzeiten der hieraus hergestellten VHS-Bänder wieder:

Erfindungsgemäß führen die Formulierungsbeispiele 2, 7, 8, 13 und 16 zu ungenügenden Bandresultaten, da die Mengen an Laurinsäure und Lecithin nicht in der erfindungsgemäßen Weise vorgelegt wurden. Alle übrigen Formulierungsbeispiele wurden in der erfindungsgemäßen Weise mit Lubricant und Netzmittel behandelt und führen demnach zu guten Magnetbändern.

In Tabelle 4, Beispiel 14, wurden genau die Mengen an Laurinsäure und Lecithin eingesetzt; die für Pigment Nr. 3 analytisch (vgl. Tabelle 1) bestimmt wurden. Das hieraus hergestellte Magnetband hat gute mechanische und videoelektrische Eigenschaften. Die angegebenen Mengen Laurinsäure und Lecithin werden für die folgende Betrachtung gleich 100 % gesetzt.

In Beispiel 15 wurden 125 % Laurinsäure und 120 % Lecithin eingesetzt. Auch das hieraus hergestellte Magnetband hat gute mechanische und videoelektrische Eigenschaften.

In Beispiel 13 wurden nur 63 % der bestimmten Menge an Laurinsäure und 48 % des Lecithins eingesetzt; in Beispiel 16 wurden entsprechend 188 % Laurinsäure und 190 % Lecithin eingesetzt : Beide Einstellungen führen zu Magnetbändern mit ungenügenden Eigenschaften.

Tabelle 3: Rezepturbeispiele mit Mengenangaben in Gew.-%

| Beispiel Nr. | 1 | 2 | 3 | 4 | 5 | 6 | 7 | 8 | 9 | 10 | 11 | 12 |
|---|---|---|---|---|---|---|---|---|---|---|---|---|
| Morthane CA 128 2) | 6,20 | 6,20 | 6,20 | 6,20 | 6,10 | 6,07 | 6,70 | 6,84 | 6,75 | 4,75 | 5,05 | 6,10 |
| Phenoxy PKKH 3) | - | - | - | - | - | - | - | - | - | 1,10 | 2,45 | - |
| Laurinsäure | 1,00 | 1,00 | 1,20 | 1,26 | 1,49 | 1,53 | 0,61 | 0,77 | 0,94 | 1,00 | 1,00 | 1,49 1) |
| Reinlecithin | 1,00 | 1,00 | 1,30 | 1,34 | 1,61 | 1,70 | 0,99 | 0,99 | 0,99 | 1,05 | 1,10 | 0,99 |
| Chromoxid GN-M 4) | 0,7 | 0,7 | 0,7 | 0,7 | 0,7 | 0,7 | 0,8 | 0,8 | 0,8 | 0,7 | 0,7 | 0,7 |
| Black Pearls 2000 5) | 0,7 | 0,7 | 0,7 | 0,7 | 0,7 | 0,7 | 0,8 | 0,8 | 0,8 | 0,7 | 0,7 | 0,7 |
| Pigment Nr. 1 4) | 24,9 | - | - | - | - | - | 24,4 | 24,3 | 24,3 | - | - | 24,8 |
| Pigment Nr. 2 4) | - | 24,9 | 24,8 | 24,8 | 24,6 | 24,6 | - | - | - | - | - | - |
| Pigment Nr. 3 4) | - | - | - | - | - | - | - | - | - | 25,0 | 26,4 | - |
| Cyclohexanon | 21,4 | 21,4 | 21,2 | 21,2 | 21,1 | 21,0 | 22,2 | 22,1 | 23,1 | 21,4 | 19,4 | 21,3 |
| MEK | 42,7 | 42,7 | 42,5 | 42,4 | 42,3 | 42,3 | 41,5 | 41,4 | 41,3 | 42,9 | 41,8 | 42,5 |
| Desmodur L 75 4) | 1,4 | 1,4 | 1,4 | 1,4 | 1,4 | 1,4 | 2,0 | 2,0 | 2,0 | 1,4 | 1,4 | 1,4 |

1) Stearinsäure

2) Morton Chemical Company, Chicago, Ill. / USA

3) Union Carbide, Corp. Danbury CT, USA

4) Handelsprodukte der BAYER AG

5) Cabot Corp., Boston MA., USA

Tabelle 3: Rezepturbeispiele mit Mengenangaben in Gew.-% (Fortsetzung)

| Beispiel Nr. | 13 | 14 | 15 | 16 |
|---|---|---|---|---|
| Morthane CA 128[2] | 6,25 | 6,2 | 6,2 | 6,1 |
| Phenoxy PKKH[3] | - | - | - | - |
| Laurinsäure | 0,5 | 0,8 | 1,0 | 1,45 |
| Reinlecithin | 0,5 | 1,05 | 1,25 | 2,0 |
| Chromoxid GN-M[4] | 0,7 | 0,7 | 0,7 | 0,7 |
| Black Pearls 2000[5] | 0,7 | 0,7 | 0,7 | 0,7 |
| Pigment Nr. 1[4] | - | - | - | - |
| Pigment Nr. 2[4] | - | - | - | - |
| Pigment Nr. 3[4] | 25,25 | 25,05 | 24,9 | 24,6 |
| Cyclohexanon | 21,75 | 21,5 | 21,45 | 21,2 |
| MEK | 42,95 | 42,6 | 42,4 | 41,9 |
| Desmodur L 75[4] | 1,4 | 1,4 | 1,4 | 1,35 |

1) Stearinsäure
2) Morton Chemical Company, Chicago, Ill. / USA
3) Union Carbide, Corp. Danbury CT, USA
4) Handelsprodukte der BAYER AG
5) Cabot Corp., Boston MA., USA

Tabelle 4: Videodaten zu den Beispielen in Tabelle 3 gemessen nach VHS-Spezifikation im Arbeitspunkt des Bezugsbandes TDK SA HS E 180 in dB-relativ zu diesem Standard

| Beispiel Nr. | 1 | 2** | 3 | 4 | 5 | 6 | 7* | 8* | 9 | 10 | 11 | 12 | 13** | 14 | 15 | 16 |
|---|---|---|---|---|---|---|---|---|---|---|---|---|---|---|---|---|
| Ny | +0,9 | - | +0,5 | +1,2 | +1,0 | +0,9 | +0,4 | +0,5 | +0,1 | +1,3 | +0,8 | +0,2 | - | +1,3 | +1,6 | +0,8 |
| Nc | +0,5 | - | -0,4 | -0,2 | -0,6 | -1,0 | -0,6 | -0,4 | -0,6 | +0,1 | -0,1 | -0,4 | - | +0,2 | +0,3 | -0,2 |
| OWC | -0,5 | - | ±0 | +0,2 | -0,2 | -0,2 | +0,2 | +0,2 | -0,1 | +0,2 | 0 | +0,2 | - | 0 | -0,2 | -0,2 |
| Ey | +0,9 | - | -0,1 | +0,1 | 0 | +0,4 | +0,6 | +0,4 | +0,1 | +0,7 | +0,6 | +0,3 | - | +1,1 | +1,5 | +0,6 |
| Ec | +0,7 | - | -1,2 | -1,8 | -1,8 | -1,2 | +0,2 | +0,2 | +0,4 | +0,1 | +0,4 | +0,1 | - | +0,1 | +0,6 | 0 |
| Standbildzeit | )60' | - | )60' | )60' | )60' | )60' | - | - | )60' | )60' | )60' | )60' | - | )60' | )60' | - |
| Laurinsäure | 4,0 | 4,0 | 4,7 | 5,1 | 5,9 | 6,2 | 2,5 | 3,2 | 3,9 | 4,0 | 3,8 | 6,0[1)] | 2,0 | 3,2 | 4,0 | 6,0 |
| Lecithin | 4,0 | 4,0 | 5,4 | 5,5 | 6,5 | 6,9 | 4,1 | 4,1 | 4,1 | 4,2 | 4,2 | 4,0 | 2,0 | 4,2 | 5,0 | 8,0 |
| Pigment Nr. | 1 | 2 | 2 | 2 | 2 | 2 | 1 | 1 | 1 | 3 | 3 | 1 | 3 | 3 | 3 | 3 |

* Band nicht lauffähig, schmiert ** Band nicht meßbar, schmiert

Es bedeuten im einzelnen:
Ey: Luminanzempfindlichkeit bei 4 MHz
Ec: Chroma(Farb)-Empfindlichkeit mit Norm-Rotfläche im OWC des Bezugsbandes
OWC: Optimaler Kopfstrom im Empfindlichkeitsmaximum bei 4 MHz
Ny: Luminanzrauschen bei 100 % Bildweiß mit Filter: Hochpass 1 kHz / Tiefpass 5 MHz
Nc: Chroma(Farb)-Rauschen bei Norm-Rotfläche mit Filter: Hochpass 1 kHz / Tieefpass 500 kHz

Die angegebenen Mengen Laurinsäure (1 = Stearinsäure) und Lecithin in g sind bezogen auf 100 g Magnetpigment.

## Ansprüche

1. Magnetlackdispersionen für magnetische Aufzeichnungsträger, bestehend aus Magnetpigment, Abrasiv, Ruß oder einem anderen Additiv zur Regulierung der Leitfähigkeit, Bindemittel, Lösemittel, Lubricant, Netzmittel und gegebenenfalls Vernetzer für das Bindemittel, dadurch gekennzeichnet, daß die jeweils eingesetzte Menge von Netzmittel und/oder Lubricant jeweils im Bereich zwischen mindestens 100 und 140 % der einzeln bestimmten Sättigungsadsorptionen des Netzmittels und des Lubricants liegt, die Mindestmenge an Netzmittel und/oder Lubricant aber 80 % der einzeln best. Sättigungsadsorptionen beträgt.

2. Magnetlackdispersionen gemäß Anspruch 1, dadurch gekennzeichnet, daß das Lubricant eine oder mehrere langkettige Carbonsäuren und das Netzmittel ein oder mehrere Phospholipide sind.

3. Magnetlackdispersionen gemäß einem der Ansprüche 1 oder 2, dadurch gekennzeichnet, daß das Netzmittel Reinlecithin mit einem Phospholipidanteil von mindestens 80 % ist.

4. Magnetlackdispersionen gemäß einem oder mehrerer der Ansprüche 1 bis 3, dadurch gekennzeichnet, daß das Lubricant eine oder mehrere gesättigte Carbonsäuren mit einer C-Atomzahl zwischen 6 und 30 sind.

5. Magnetlackdispersionen gemäß Anspruch 4, dadurch gekennzeichnet, daß die gesättigten Carbonsäuren lineare Monocarbonsäuren sind.

6. Verfahren zur Herstellung der Magnetlackdispersionen gemäß einem oder mehrerer der Ansprüche 1 bis 5, dadurch gekennzeichnet, daß das Netzmittel und/oder das Lubricant jeweils im Bereich zwischen mindestens 100 und 140 % der einzeln bestimmten Sättigungsadsorption des Netzmittels und des Lubricants eingesetzt werden, die Mindestmenge an Netzmittel und/oder Lubricant aber 80 % der einzeln bestimmten Sättigungsadsorptionen beträgt.

7. Verfahren zur Herstellung von Magnetlackdispersionen gemäß Anspruch 6, dadurch gekennzeichnet, daß als Lubricant eine oder mehrere langkettige Carbonsäuren und als Netzmittel ein oder mehrere Phospholipide eingesetzt werden.

8. Verfahren zur Herstellung von Magnetlackdispersionen gemäß einem der Ansprüche 6 oder 7, dadurch gekennzeichnet, daß das Netzmittel Reinlecithin mit einem Phospholipidanteil von mindestens 80 % ist.

9. Verfahren zur Herstellung von Magnetlackdispersionen gemäß einem oder mehrerer der Ansprüche 6 bis 8, dadurch gekennzeichnet, daß als Lubricant eine oder mehrere gesättigte Carbonsäuren, insbesondere lineare Monocarbonsäuren, mit einer C-Atomzahl zwischen 6 und 30 eingesetzt werden.

10. Verwendung der Magnetlackdispersionen gemäß einem der Ansprüche 1 bis 9 für die Herstellung von magnetischen Aufzeichnungsträgern.